# FASCICULE DE BREVET EUROPEEN

(11) **EP 0 367 880 B1**
(45) Date de publication et mention de la délivrance du brevet: **29.05.1996**
(21) Numéro de dépôt: 88402807.7
(22) Date de dépôt: 08.11.1988
(51) Int. Cl.: G11B 5/127, G11B 5/23, G11B 5/193

(54) **Procédé de réalisation d'une tête magnétique d'enregistrement/lecture**
Herstellungsverfahren eines Aufzeichnungs-/Wiedergabemagnetkopfes
Process for producing a magnetic write/read head

(43) Date de publication de la demande: 16.05.1990
(73) Titulaire: THOMSON-CSF, 75008 Paris (FR)
(72) Inventeur: Penot, Maurice, F-75008 Paris (FR); Rolland, Jean-Luc, F-75008 Paris (FR); Machui, Jurgen, F-75008 Paris (FR); Meunier, Paul-Louis, F-75008 Paris (FR)
(74) Mandataire: Grynwald, Albert

(56) Documents cités:
- EP-A- 0 052 708
- DE-A- 2 041 015
- DE-A- 2 751 211
- DE-C- 924 350
- FR-A- 1 159 994
- US-A- 3 229 355
- US-A- 3 613 228
- PATENT ABSTRACTS OF JAPAN, vol. 10, no. 195 (P-475)[2251], 9 juillet 1986; & JP-A-61 39 207
- PATENT ABSTRACTS OF JAPAN, vol. 9, no. 259 (P-397)[1982], 17 octobre 1985; & JP-A-60 107 712
- PATENT ABSTRACTS OF JAPAN, vol. 11, no. 156 (P-578)[2603], 21 mai 1987; & JP-A-61 292 209
- PATENT ABSTRACTS OF JAPAN, vol. 10, no. 22 (P-424)[2079], 28 janvier 1986; & JP-A-60 175 204
- PATENT ABSTRACTS OF JAPAN, vol. 4, no. 58 (P-9)[540], 30 avril 1980; & JP-A-55 28 532

## Description

L'invention concerne un procédé de réalisation d'une tête magnétique d'enregistrement/lecture et plus particulièrement un procédé de réalisation de l'entrefer d'une tête magnétique. Elle est applicable notamment à la réalisation de têtes magnétiques en couches minces mais est applicable aux autres types de têtes.

Les têtes magnétiques de lecture et/ou d'enregistrement sont constituées d'un circuit magnétique en forme d'anneau coupé par un entrefer étroit constitué d'un matériau non magnétique.

On peut classer les têtes magnétiques en trois grandes familles :
- les têtes massives sont réalisées par usinage et assemblage de deux demi-têtes en matériau magnétique telles que les têtes vidéo (têtes VHS) ou les têtes audio analogiques. Le bobinage de ces têtes est réalisé en fin de procédé de réalisation.

Le Brevet DE-A-0 924 350 décrit une telle tête. Après que les deux demi-têtes sont fixées l'une à l'autre, une étape d'usinage amène au même niveau les deux surfaces de la tête situées de chaque côté de l'entrefer et qui sont en contact avec la bande.
- Les têtes couches minces sont réalisées par dépôt successifs de matériaux magnétiques, diélectriques et conducteurs. Ces couches subissent des opérations de masquage et de gravure qui permettent d'obtenir le circuit magnétique, l'entrefer et les spires conductrices.
- Les têtes comportant de chaque côté de l'entrefer un alliage métallique magnétique d'épaisseur variant entre 0,1 et 40 micromètres, le reste du circuit magnétique et les spires conductrices étant réalisés de la même façon que pour les têtes massives. Il s'agit des têtes vidéo 8 mm et des têtes digitales dites RDAT (Rotary Digital Audio Tape).

De plus, le brevet JP-A-61 39207 décrit un procédé de réalisation d'une tête magnétique d'enregistrement/lecture selon lequel on usine dans un substrat en matériau magnétique une encoche dont la largeur correspond à la largeur désirée de l'entrefer. Ensuite, on dépose un matériau non magnétique dans le rétrécissement. Le substrat est coupé en plusieurs têtes magnétiques et la face de chaque tête, située du côté de l'encoche, est usinée jusqu'à atteindre l'encoche. Enfin une partie arrière en matériau magnétique, qui comporte une bobinage, est couplée à la tête.

Le brevet JP-A-55 28532 décrit un procédé de réalisation d'une tête magnétique d'enregistrement/lecture selon lequel l'entrefer se produit automatiquement par la suppression d'une surface en forme de V intégrée dans la surface qui est en contact avec la bande.

Les têtes massives ont généralement une bonne efficacité à l'écriture mais les matériaux magnétiques utilisés généralement s'avèrent incapables d'aimanter des supports magnétiques de haute coercivité (1500 Oersteds). Leur procédé de réalisation est simple et peu coûteux. Les têtes couches minces ont elles aussi une bonne efficacité à l'écriture et s'avèrent capables d'aimanter des supports à forte coercivité. Elles représentent toutefois des inconvénients importants : elles nécessitent de nombreuses opérations d'usinage mécanique et de polissage, des dépôts de couche de l'ordre de 20 micromètres d'épaisseur, et des difficultés au niveau des différents scellements de verre. Toutes les têtes présentent l'inconvénient que les entrefers sont difficiles à maîtriser.

L'invention permet de résoudre ces difficultés et de réaliser aisément avec précision les entrefers de têtes magnétiques.

L'invention concerne donc un procédé de réalisation d'une tête magnétique d'enregistrement/lecture comprenant les étapes suivantes :
- une première étape d'usinage à partir d'une première face dans un substrat en matériau magnétique, d'une encoche ;
- une deuxième étape de dépôt dans le rétrécissement d'un matériau non magnétique ;
- une troisième étape de soudure sur la première face du substrat d'une pièce en matériau magnétique, couplant magnétiquement les parties de substrat situées de part et d'autre de l'encoche ;
- une quatrième étape d'usinage d'une deuxième face du substrat opposée à la première face jusqu'à atteindre les dites parois ; et
- une cinquième étape de réalisation d'un bobinage passant dans l'encoche et entourant une branche du circuit magnétique du substrat;
caractérisé en ce :
- le fond de l'encoche se termine par des parois déterminant un gradient de largeur de l'encoche en vue de régler avec précision la largeur de l'entrefer ; et
- le deuxième face est usinée jusqu'à obtenir un entrefer de largeur désirée pour la tête à réaliser.

Les différents objets et caractéristiques de l'invention apparaîtront plus clairement dans la description qui va suivre faite à titre d'exemple en se reportant aux figures annexées qui représentent :
- les figures 1 à 5, différentes étapes du procédé de réalisation selon l'invention ;
- la figure 6, un exemple de réalisation d'un entrefer d'une tête magnétique délimitée par des faces parallèles ;
- les figures 7 et 8, un exemple de réalisation d'un entrefer délimité par des faces non parallèles ;
- les figures 9 à 14, un exemple de réalisation d'une tête magnétique selon l'invention avec bobinage préfabriqué.

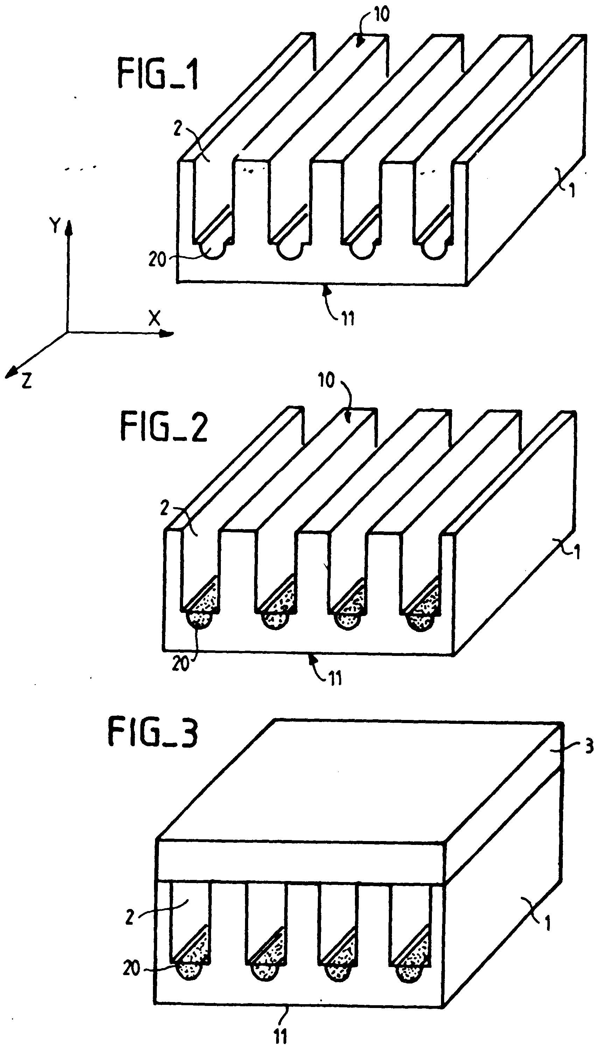

En se reportant aux figures 1 à 5 on va tout d'abord décrire le procédé général de réalisation d'une tête magnétique selon l'invention.

Au cours d'une première étape on réalise dans un substrat 1 en matériau, tel qu'un bloc de ferrite, une ou plusieurs encoches sensiblement perpendiculaires à une face principale du substrat. Sur la figure 1, on a ainsi représenté un substrat 1 dans lequel ont été réalisées quatre encoches telle que 2. Ces encoches sont perpendiculiares à la face 10 du substrat. Elles possèdent, au fond de l'encoche, un rétrécissement 20. Toutes ces encoches ont la même profondeur et n'atteignent pas la face 11 opposée à la face.

Au cours d'une deuxième étape, on remplit les rétrécissements, tels que 20, d'un matériau non magnétique. Par exemple, on coule un matériau à base de verre. On obtient ainsi une structure telle que celle de la figure 2.

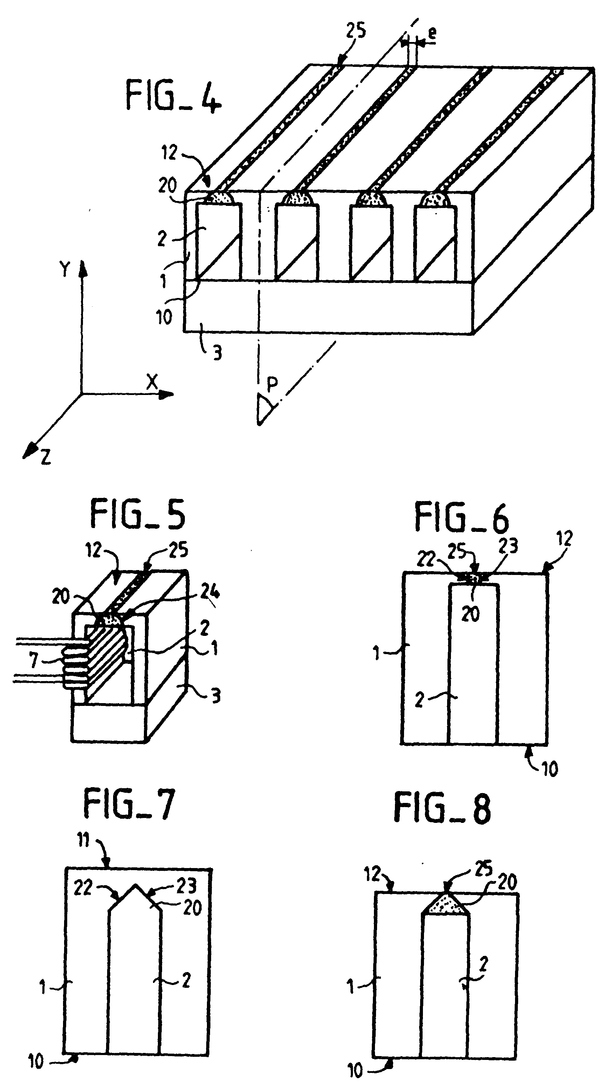

Au cours d'une troisième étape représentée en figure 3, on fixe, sur la face 10 du substrat, une plaque 3 d'un matériau magnétique. Cette plaque referme les encoches réalisées précédemment et permettra de refermer le circuit magnétique de la tête.

Au cours d'une quatrième étape, on usine la face 11 du substrat parallélement aux fonds des encoches. On atteint les rétrécissements (20) et on usine jusqu'à obtenir des entrefers tels que 25, constitués du matériau non magnétique, de largeur e désirée. On obtient ainsi une structure telle que représentée en figure 4. La précision de largeur de l'entrefer est réglée par l'epaisseur d'usinage de la face 11.

Ensuite, on découpe la structure ainsi réalisée en circuits magnétiques individuels. La découpe se fair selon des plans tels que P situés entre les encoches et parallèles à l'axe des encoches. La structure de la figure 4 étant placée dans un triède XYZ, avec les faces 10 et 11 parallèles au plans XZ, les plans tels que P sont parallèles au plan ZY.

Ensuite, on découpe également, selon des plans non représentés, parallèles au plan YX.

Au cours d'une étape ultérieure, chaque circuit magnétique est équipé d'un bobinage 7 tel que cela est représenté en figure 5. Ce bobinage est bobiné par l'encoche 2 autour d'une branche du circuit magnétique 2.

Enfin dans le cas d'une tête magnétique en couches minces la face active 11 de tête comportant l'entrefer 25 est revêtue d'une couche d'une matériau fortement magnétique tel que celui connu sous le nom de Sendust (Feₓ Si_{y} Al_{z}). Cette opération peut également être faite avant les découpes en circuits magnétiques individuels. Ce revêtement de matériau fortement magnétique recouvre la face 11 excepté l'entrefer 25 de chaque circuit magnétique.

Selon l'invention, la réalisation de chaque encoche 2 peut se faire de différentes façons.

Selon une première méthode, l'encoche 2 est réalisé à l'aide d'un disque abrasif ou meule dont le profil possède la forme de l'encoche 2 et de son rétrécissement 20 à obtenir. Le disque abrasif est donc épaulé aux dimensions de l'encoche à obtenir.

Selon une deuxième méthode, l'encoche 2 est réalisée par les passages successifs de deux disques abrasifs. Un premier disque de largeur suffisante réalise ainsi l'encoche 2 nécessaire au passage du bobinage, puis un deuxième disque abrasif de faible largeur et de profil approprié réalise le rétrécissement 20 dans le fond de l'encoche 2.

En ce qui concerne le matériau non magnétique de l'encoche (verre, par exemple), il est important que la dureté de ce matériau coulé soit la plus proche possible de cette ferrite utilisé pour le substrat 2, ceci pour faciliter le polissage de la tête. Le coëfficient de dilatation du matériau coulé doit également s'approcher de celui du substrat A pour faciliter le dépôt de "sendust".

En ce qui concerne la plaque de matériau magnétique 3, elle peut être réalisée dans un matériau tel qu'un monocristal de ferrite ou un ferrite polycristallin. Son collage sur le substrat 1 peur se faire à l'aide de verre fondu ou pulvérisé, ou à l'aide d'une résine époxy par exemple. L'épaisseur de la plaque 3 est plus ou moins importante selon la hauteur de la tête à obtenir.

L'usinage de la face 11 du substrat pour obtenir la face 12 active la tête magnétique et son entrefer 25 se fait par un meulage complété d'une finition par polissage de la face 12 obtenue. La largeur de la partie non magnétique (entrefer 25) est fonction de cet usinage et donc de l'épaisseur de matière enlevée. La largeur e de l'entrefer 25 peut varier entre 50 et 150 micromètres, par exemple, selon les besoins techniques.

La forme du rétrécissement 20 peut être arrondie comme cela est représenté dans l'exemple de réalisation des figures 1 à 5. Le rétrécissement 20 est alors déterminé par une surface courbe dont la convexité est dirigée vers la face 11 du substrat. Après usinage de la face 11, on obtient alors un entrefer délimité par deux arêtes bien délimitées.

Ceci permet un transport de flux plus efficace à travers le gap. Des angles vifs à l'intérieur du circuit magnétique entraînent une forte concentration du flux.

Comme cela est représenté en figure 6, le rétrécissement 20 de l'entrefer peut être défini par deux faces parallèles 22 et 23.

Le rétrécissement 20 peut être également délimité par deux faces 22 et 23 faisant un angle dont la pointe est dirigée vers la face 11 du substrat 1.

Après remplissage du rétrécissement par un matériau non magnétique et après usinage de la face 11, l'entrefer 25 de la tête magnétique est formé par le matériau situé entre les deux faces 22 et 23.

Le procédé réalisation prévoyant un rétrécissement 20 tel que représenté en figures 7 et 8 permettra de maitriser l'épaisseur tout comme la largeur de l'entrefer 25.

La largeur de l'entrefer 25 pourra être réglé à une valeur comprise entre 50 et 150 micromètres. Une valeur qui semble donner satisfaction est une largeur de 80 micromètres.

En ce qui concerne le bobinage des têtes magnétiques ainsi décrites, le substrat ne préjuge pas du type de bobinage.

Dans ce qui précède on a prévu bobinage bobiné autour d'une partie du circuit magnétique et passant par l'encoche 2.

Selon un autre mode de réalisation, on prévoit des bobinages préalablement moulés qui sont insérés dans une série de petits plots prévus à la base du substrat (sur la face 10) de la face active par usinage, passage d'un disque diamanté en X - Y avant le collage.

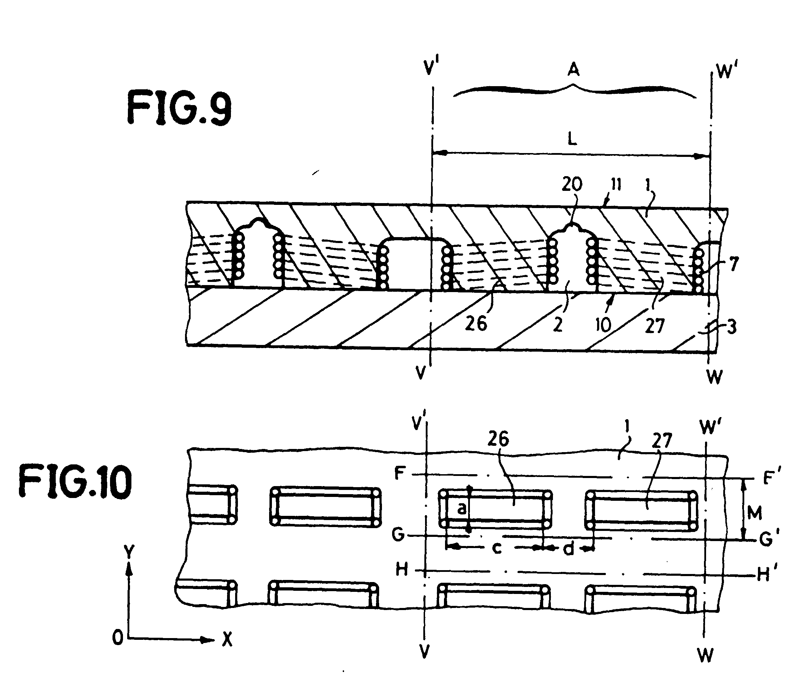

Les figures 9 et 10 représentent un tel exemple de réalisation.

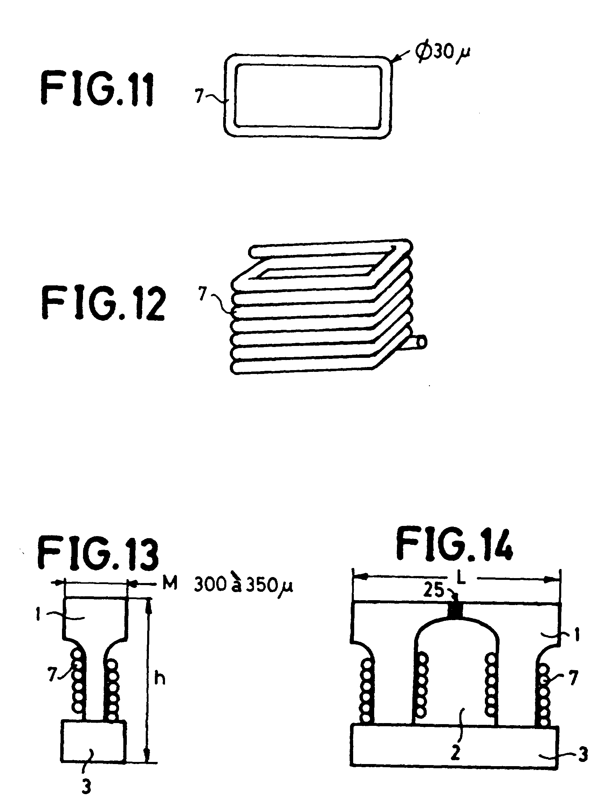

Avant bobinage et collage de la plaque 3 le substrat 1 subi un usinage selon les axes OX et OY de la figure 10 de façon à réaliser des plots tels que 26 et 27. Ensuite des bobinages préfabriqués tels que celui représenté en figures 11 et 12 sont montés sur ces plots. La plaque 3 est ensuite collée sur la face 10 du substrat. On obtient ainsi une structure telle que représenté par les figures 9 et 10.

La face 11 est alors usinée de façon à faire apparaître les entrefers 25, et chaque tête magnétique est découpée.

Par exemple, on obtient une tête magnétique comportant les plots 26 et 27 en découpant selon les axes VV′, WW′ et FF′, GG′.

La tête obtenue est du type représenté en figures 13 et 14.

A titre d'exemple, l'usinage des plots est tel que leurs dimensions sont les suivantes :
- a ≃ 200 micromètres
- d ≃ 800 micromètres
- c ≃ 400 micromètres

La découpe de chaque tête permet d'obtenir une tête telle que sur les figures 13 et 14 elle ait pour :
- longueur L ≃ 2300 micromètres
- largeur M≃ 300 à 350 micromètres
- hauteur h ≃600 à 700 micromètres

Un bobinage tel que représnté en figures 11 et 12 doit avoir des dimensions permettant son emboitement sur un plot. Il sera par exemple réalisé avec du fil de 30 micromètres de diamètre, sa hauteur sera d'environ 400 micromètres et ses dimensions intérieures, supérieures à celles d'un plots c'est à dire supérieures à 800x200 micromètres.

Selon une autre variante de réalisation non représentée il est également possible d'usiner les plots (26, 27) sur la plaque 3 au lieu du substrat, puis de monter les bobinages préfabriqués sur ces plots et ensuite d'assembler la plaque 3 munis des bobinages avec le substrat 1 après que celui-ci ait été usiné pour former les encoches 2 et 20.

Selon le procédé de l'invention, un matériau non magnétique (ex. verre) est donc coulé dans des saignées de faible largeur usinées dans un substrat magnétique (ferrite polycristallin ou monocristallin). Après remplissage de ce matériau, une seule opération d'usinage est nécessaire pour faire apparaître cette zone de matériau non magnétique à la largeur désirée (exemple 50 micromètres à 150 micromètres).

Ce mode de réalisation permet, au niveau de l'entrefer, d'obtenir un meilleur guidage du flux magnétique. Il permet, de plus, de travailler avec des substrats de grande dimension.

En résumé, les trois avantages principaux de l'invention sont :
- une conception industrielle simple,
- très peu d'opérations d'usinage,
- un traitment collectif des têtes magnétiques.

L'invention permet ainsi de réaliser une tête magnétique comportant un entrefer 25 délimité dans un substrat 1 par deux faces 23,24 formant un angle dont la pointe est dirigée vers la face active 12 d'enregistrement de la tête tel que cela est représenté en figure 8.

La tête de l'invention peut également avoir son entrefer 25 délimité par une surface courbe dont la convexité est dirigée vers la face active 12 d'enregistrement de la tête telle qu'elle est représentée par la figure 5.

Il est bien évident que la description qui précède n'a été faite qu'à titre d'exemple non limitatif et que d'autres variantes peuvant être envisagées sans sortir du cadre de l'invention. Les exemples numériques et la nature des matériaux indiqués n'ont été fournis que pour illustrer la description.

## Revendications

1. Procédé de réalisation d'une tête magnétique d'enregistrement/lecture comprenant les étapes suivantes :
- une première étape d'usinage à partir d'une première face (10) dans un substrat (1) en matériau magnétique, d'une encoche (2) ;
- une deuxième étape de dépôt dans le rétrécissement (20) d'un matériau non magnétique ;
- une troisième étape de soudure sur la première face (10) du substrat (1) d'une pièce (3) en matériau magnétique, couplant magnétiquement les parties de substrat (22,23) situées de part et d'autre de l'encoche (2);
- une quatrième étape d'usinage d'une deuxième face (11) du substrat (1) opposée à la première face (10) jusqu'à atteindre les dites parois (22,23) ; et
- une cinquième étape de réalisation d'un bobinage passant dans l'encoche (2) et entourant une branche du circuit magnétique du substrat ;
caractérisé en ce :
- le fond de l'encoche se termine par des parois (22,23) déterminant un gradient de largeur de l'encoche en vue de régler avec précision la largeur de l'entrefer ; et
- la deuxième face (11) est usinée jusqu'à obtenir un entrefer de largeur désirée pour la tête à réaliser.

2. Procédé de réalisation d'une tête magnétique d'enregistrement/lecture selon la revendication 1, caractérisé en ce que la cinquième étape est réalisée avant la troisième étape.

3. Procédé de réalisation d'une tête magnétique d'enregistrement/lecture selon la revendication 1, caractérisé en ce que la première étape d'usinage est réalisée par meulage à l'aide d'une meule dont le profil présente un rétrécissement de façon à obtenir une forme d'encoche (2) déterminée.

4. Procédé de réalisation d'une tête magnétique d'enregistrement/lecture selon la revendication 1, caractérisé en ce que la première étape d'usinage est réalisée sous forme :
- d'une première phase d'usinage d'une première encoche (2) de section de dimensions nécessaires au logement d'un bobinage ;
- d'une deuxième phase d'usinage, dans le fond de l'encoche (2) obtenue, d'une deuxième encoche (20) de largeur plus réduite et présentant un rétrécissement.

5. Procédé de réalisation d'une tête magnétique d'enregistrement/lecture selon la revendication 4, caractérisé en ce que les deux phases d'usinage sont réalisées par meulage à l'aide de deux meules de profils correspondant chacune à la forme d'une des deux encoches (2, 20) à réaliser.

6. Procédé de réalisation d'une tête magnétique d'enregistrement/lecture selon la revendication 1, caractérisé en ce que le rétrécissement (20) présente deux faces planes (22, 23) formant un angle dont la pointe est dirigée vers la deuxième face (11) du substrat (1).

7. Procédé de réalisation d'une tête magnétique d'enregistrement/lecture caractérisé en ce que le rétrécissement (20) est délimité par une surface courbe (24) dont la convexité est dirigée vers la deuxième face (11) du substrat (1).

8. Procédé de réalisation d'une tête magnétique d'enregistrement/lecture, caractérisé en ce que le matériau non magnétique déposé dans le rétrécissement (20) est du matériau à base de silice.

9. Procédé de réalisation d'une tête magnétique d'enregistrement/lecture selon la revendication 1, caractérisé en ce que :
- la première étape d'usinage prévoit la réalisation de plusieurs encoches (2) de même profondeur à partir de la première face (10) du substrat (1);
- la deuxième étape prévoit de déposer du matériau non magnétique dans les rétrécissements (20) des différentes encoches (2) réalisées ;
- la troisième étape de soudure permet de recouvrir sur la face (10) toutes les encoches (2) à l'aide d'une même pièce (3) de matériau magnétique ;
- la quatrième étape d'usinage permet d'atteindre les rétrécissements des différentes encoches réalisées ;
- une étape supplémentaire de découpe, placée entre la quatrième et la cinquième étape, permet de découper le substrat (1) et la pièce (3), entre les différentes encoches parallèlement à l'axe des encoches, de façon à obtenir autant de têtes magnétiques qu'il y a d'encoches (2).

10. Procédé de réalisation d'une tête magnétique d'enregistrement/lecture selon la revendication 2, caractérisé en ce que la cinquième étape de réalisation d'un bobinage est obtenue par collage d'un bobinage préfabriqué contre la première face (10) du substrat, la troisième étape permettant de juxtaposer la pièce (3) sur ledit bobinage.

11. Procédé de réalisation d'une tête magnétique d'enregistrement/lecture selon la revendication 2, caractérisé en ce qu'il comporte, entre la deuxième et la troisième étapes, une étape supplémentaire d'usinage de plots (26, 27) et de mise en place sur ces plots de bobinages (7) préfabriquées, la cinquième étape étant alors supprimée.

12. Procédé de réalisation d'une tête magnétique d'enregistrement/lecture selon la revendication 11, caractérisé en ce que l'usinage des plots se fait sur la pièce (3) en matériau magnétique.

## Patentansprüche

1. Verfahren zur Herstellung eines Aufzeichnungs-/Wiedergabemagnetkopfes, das die folgenden Schritte umfaßt:
- einen ersten Schritt der Herstellung einer Kerbe (2) ausgehend von einer ersten Seite (10) in einem Substrat (1) aus magnetischen Material;
- einen zweiten Schritt der Ablagerung eines nichtmagnetischen Materials in der Verengung (20);
- einen dritten Schritt des Schweißens oder Lötens eines Stückes (3) aus magnetischem Material auf die erste Seite (10) des Substrats (1), wobei das Stück die Teile (22, 23) des Substrats magnetisch verbindet, die auf beiden Seiten der Kerbe (2) liegen;
- einen vierten Schritt der Bearbeitung einer zweiten Seite (11) des Substrats (1), die der ersten Seite (10) entgegengesetzt ist, bis zum Erreichen der Wände (22, 23); und
- einen fünften Schritt der Herstellung einer Spule, die durch die Kerbe (2) geht und einen Zweig des Magnetkreises des Substrats umringt;
dadurch gekennzeichnet, daß
- der Boden der Kerbe in den Wänden (22, 23) endet, die einen Gradienten der Breite der Kerbe im Hinblick auf präzises Einstellen der Breite des Spaltes bestimmen; und
- eine zweite Seite (11) bearbeitet wird, bis ein Spalt von gewünschter Breite für den herzustellenden Kopf erreicht ist.

2. Verfahren zur Herstellung eines Aufzeichnungs-/Wiedergabemagnetkopfes nach Anspruch 1, dadurch gekennzeichnet, daß der fünfte Schritt vor dem dritten Schritt ausgeführt wird.

3. Verfahren zur Herstellung eines Aufzeichnungs-/Wiedergabemagnetkopfes nach Anspruch 1, dadurch gekennzeichnet, daß der erste Schritt der Herstellung durch Schleifen mit Hilfe eines Schleifkörpers ausgeführt wird, dessen Profil eine Verengung aufweist, so daß eine bestimmte Form der Kerbe (2) erhalten wird.

4. Verfahren zur Herstellung eines Aufzeichnungs-/Wiedergabemagnetkopfes nach Anspruch 1, dadurch gekennzeichnet, daß der erste Schritt der Herstellung in folgender Form ausgeführt wird:
- mit einer ersten Phase der Herstellung einer ersten Kerbe (2) mit einem Querschnitt von erforderlichem Ausmaß zur Unterbringung einer Spule;
- mit einer zweiten Phase der Herstellung einer zweiten Kerbe (20), die von geringerer Breite ist und eine Verengung aufweist, im Boden der erhaltenen Kerbe (2).

5. Verfahren zur Herstellung eines Aufzeichnungs-/Wiedergabemagnetkopfes nach Anspruch 4, dadurch gekennzeichnet, daß die zwei Phasen der Herstellung durch Schleifen mit Hilfe von zwei Schleifkörpern mit Profilen, die jeweils der Form einer der zwei herzustellenden Kerben (2,20) entsprechen, realisiert werden.

6. Verfahren zur Herstellung eines Aufzeichnungs-/Wiedergabemagnetkopfes nach Anspruch 1, dadurch gekennzeichnet, daß die Verengung (20) zwei ebene Flächen (22, 23) aufweist, die einen Winkel bilden, dessen Spitze zur zweiten Seite (11) des Substrats (1) gerichtet ist.

7. Verfahren zur Herstellung eines Aufzeichnungs-/Wiedergabemagnetkopfes, dadurch gekennzeichnet, daß die Verengung (20) von einer gekrümmten Oberfläche (24) begrenzt wird, deren Krümmung zur zweiten Seite (11) des Substrats gerichtet ist.

8. Verfahren zur Herstellung eines Aufzeichnungs-/Wiedergabemagnetkopfes, dadurch gekennzeichnet, daß das nichtmagnetische Material, das in der Verengung (20) abgelagert wird, ein Material auf der Basis von Siliciumdioxid ist.

9. Verfahren zur Herstellung eines Aufzeichnungs-/Wiedergabemagnetkopfes nach Anspruch 1, dadurch gekennzeichnet, daß:
- der erste Schritt der Herstellung von der ersten Seite (10) des Substrat (1) ausgehend die Herstellung mehrerer Kerben (2) von gleicher Tiefe vorsieht;
- der zweite Schritt es vorsieht, nichtmagnetisches Material in den Verengungen (20) der verschiedenen hergestellten Kerben (2) abzulagern;
- der dritte Schritt des Schweißens oder Lötens es ermöglicht, auf der Seite (10) alle Kerben (2) mit Hilfe desselben Stücks (3) aus magnetischem Material zu bedecken;
- der vierte Schritt der Bearbeitung es ermöglicht, die Verengungen der verschiedenen hergestellten Kerben zu erreichen;
- ein zusätzlicher Schritt des Zerschneidens, der zwischen dem vierten und dem fünften Schritt liegt, es ermöglicht, das Substrat (1) und das Stück (3) zwischen den verschiedenen Kerben parallel zur Achse der Kerben zu zerschneiden, so daß ebensoviele Magnetköpfe erhalten werden, wie es Kerben (2) gibt.

10. Verfahren zur Herstellung eines Aufzeichnungs-/Wiedergabemagnetkopfes nach Anspruch 2, dadurch gekennzeichnet, daß der fünfte Schritt der Herstellung einer Spule durch Kleben einer vorgefertigten Spule an die erste Seite (10) des Substrats erreicht wird, wobei der dritte Schritt es ermöglicht, das Stück (3) an die Spule zu legen.

11. Verfahren zur Herstellung eines Aufzeichnungs-/Wiedergabemagnetkopfes nach Anspruch 2, dadurch gekennzeichnet, daß es zwischen dem zweiten und dem dritten Schritt einen zusätzlichen Schritt der Herstellung von Klötzen (26, 27) und der Anbringung von vorgefertigten Spulen (7) an diesen Klötzen umfaßt, wobei der fünfte Schritt dann fortgelassen wird.

12. Verfahren zur Herstellung eines Aufzeichnungs-/Wiedergabemagnetkopfes nach Anspruch 11, dadurch gekennzeichnet, daß die Herstellung der Klötze an dem Stück (3) aus magnetischem Material geschieht.

## Claims

1. Method of producing a magnetic read/write head, comprising the following stages:
- a first stage of machining a notch (2) from a first face (10) in a substrate (1) made of magnetic material;
- a second stage of depositing a non-magnetic material in the narrowing (20);
- a third stage of welding, to the first face (10) of the substrate (1), a piece (3) made of magnetic material, magnetically coupling the substrate parts (22, 23) situated on either side of the notch (2);
- a fourth stage of machining a second face (11) of the substrate (1) opposite the first face (10), until the said walls (22, 23) are reached; and
- a fifth stage of producing a winding passing into the notch (2) and surrounding one limb of the magnetic circuit of the substrate;
characterized in that:
- the bottom of the notch terminates in walls (22, 23) determining a width gradient of the notch for the purpose of precisely adjusting the width of the gap; and
- the second face (11) is machined until a gap is obtained of the desired width for the head to be produced.

2. Method of producing a magnetic read/write head according to Claim 1, characterized in that the fifth stage is carried out before the third stage.

3. Method of producing a magnetic read/write head according to Claim 1, characterized in that the first machining stage is carried out by means of milling using a mill, the profile of which has a narrowing so as to obtain a defined notch shape (2).

4. Method of producing a magnetic read/write head according to Claim 1, characterized in that the first machining stage is carried out in the form:
- of a first phase of machining a first notch (2) with cross-section having dimensions necessary for accommodating a winding;
- of a second phase of machining, in the bottom of the notch (2) obtained, a second notch (20) of lesser width exhibiting a narrowing.

5. Method of producing a magnetic read/write head according to Claim 4, characterized in that the two machining phases are carried out by milling using two mills with profiles each corresponding to the shape of one of the two notches (2, 20) to be produced.

6. Method of producing a magnetic read/write head according to Claim 1, characterized in that the narrowing (20) exhibits two plane faces (22, 23) forming an angle, the vertex of which is turned towards the second face (11) of the substrate (1).

7. Method of producing a magnetic read/write head, characterized in that the narrowing (20) is delimited by a curved surface (24), the convexity of which is turned towards the second face (11) of the substrate (1).

8. Method of producing a magnetic read/write head, characterized in that the non-magnetic material deposited in the narrowing (20) is silica-based material.

9. Method of producing a magnetic read/write head according to Claim 1, characterized in that:
- the first machining stage provides for several notches (2) of the same depth to be produced from the first face (10) of the substrate (1);
- the second stage provides for non-magnetic material to be deposited in the narrowings (20) of the various notches (2) produced;
- the third welding stage makes it possible to cover all the notches (2) on the face (10), using a single piece (3) of magnetic material;
- the fourth machining stage makes it possible to reach the narrowings of the various notches produced;
- an additional cutting stage, placed between the fourth and the fifth stage, makes it possible to cut up the substrate (1) and the piece (3), between the various notches parallel to the axis of the notches, so as to obtain as many magnetic heads as there are notches (2).

10. Method of producing a magnetic read/write head according to Claim 2, characterized in that the fifth stage of producing a winding is obtained by bonding a prefabricated winding against the first face (10) of the substrate, the third stage making it possible to juxtapose the piece (3) on the said winding.

11. Method of producing a magnetic read/write head according to Claim 2, characterized in that it includes, between the second and the third stages, an additional stage of machining studs (26, 27) and of installing prefabricated windings (7) on these studs, the fifth stage then being dispensed with.

12. Method of producing a magnetic read/write head according to Claim 11, characterized in that the machining of the studs takes place on the piece (3) made of magnetic material.
